# EUROPEAN PATENT APPLICATION

(11) **EP 4 656 277 A1**
(43) Date of publication of application: **03.12.2025**
(21) Application number: 24178205.1
(22) Date of filing: 27.05.2024
(51) Int. Cl.: B01D 63/06, B01D 29/44, B01D 63/08, B01D 63/14

(54) **FILTER MODULE WITH EDGE STRUCTURE PROTECTED MEMBRANE**

(71) Applicant: Sartorius Stedim Biotech GmbH, 37079 Göttingen (DE)
(72) Inventor: LOEWE, Thomas, 37079 Göttingen (DE); SCHNEIDER, Benjamin, 37079 Göttingen (DE); ERDMANN, Max, 37079 Göttingen (DE); FRIESE, Thomas, 37079 Göttingen (DE)
(74) Representative: Müller-Boré & Partner Patentanwälte PartG mbB

(57) **Abstract**

The present invention relates to a filter module comprising a membrane (3), an edge structure (2), and an anchoring element (1), wherein the edge structure (2) is arranged over a surface of the membrane (3) in an edge region thereof and is embedded in the anchoring element (1), a difference between melting temperatures of the membrane (3) and the anchoring element (1) is from -25 K to 60 K, and a difference between melting temperatures of the edge structure (2) and the membrane (3) is 15 K or more. Moreover, the present invention relates to a method for producing the filter module as well as the use of the filter module for filtering a fluid medium.

## Description

The present invention relates to a filter module comprising a membrane, an edge structure, and an anchoring element, wherein the edge structure is arranged over a surface of the membrane in an edge region thereof and is embedded in the anchoring element, a difference between melting temperatures of the membrane and the anchoring element is from -25 K to 60 K, and a difference between melting temperatures of the edge structure and the membrane is 15 K or more. Moreover, the present invention relates to a method for producing the filter module as well as the use of the filter module for filtering a fluid medium.

The portfolio of air filters, particularly the ASTM 838 sterile filtering air filters, relies on filter materials that are gas-permeable but retain or repel liquid media. In the field of pharmaceutical processes, these are predominantly water-based, so that hydrophobic materials are used. Over 80% of these are expanded polytetrafluoroethylene (ePTFE), the remainder are polyvinylidene fluoride (PVDF) or base structures made of other materials, e.g. polymer materials such as polyethersulfone (PESU), which are provided with halogen-containing coatings or impregnations that are essential for the required hydrophobicity.

However, in the course of increasing regulatory requirements and current trends towards sustainable solutions, i.e. including the use of materials that are as standardised and recyclable as possible, as well as the trend to replace environmentally and biologically harmful materials, especially halogenated materials, as far as possible, preferably completely, with more compatible materials, there is a need to adapt filter products accordingly.

In order to fulfil the above-mentioned trends, solutions must be found that do not contain halogen-containing materials (especially elements such as fluorine, chlorine, or bromine), i.e. specifically not ePTFE and PVDF, as well as no halogen-containing modifying or coating substances. In addition, the greatest possible material or material group homogeneity should be obtained between the various components of the air filter and ideally also with other add-on parts, so that the separation effort during disposal or recycling can be simplified as much as possible.

Among the known materials for the production of microporous membranes are also those from the group of polyolefins, in particular polyethylene (PE) and polypropylene (PP), especially from various subcategories such as high-density PE (HDPE) or ultra-high molecular weight PE (UHMWPE). The market penetration of such materials is still low, as other materials currently have more favourable properties such as higher melting point temperatures (MT) or better mechanical stability.

In the course of the above-mentioned trends, however, polyolefins are currently the materials with the greatest general distribution, the best recyclability and also the materials from which the housings of established filter products are made. For this reason, polyolefins are particularly suitable for meeting the above-mentioned trends. In addition, polyolefins, especially PE and PP, have an intrinsic hydrophobicity. This is very important for water-repellent functionality and is particularly suitable and therefore valuable when highly developed, especially, as this property is inherent in the material itself and does not need to be created or reinforced by additional substances.

However, there is a natural technical problem with inserting membrane structures made of polyolefins into polyolefin components using the preferred method of thermal joining, i.e. melting housing materials. Current membrane materials such as ePTFE (MT > 570 K), PVDF (MT = ~450 K) or PESU (MT > 620 K) have higher to significantly higher melting point temperatures than the housing components made of PP (MT = 405-445 K) or PE (MT = 380-430 K) that are to be thermally melted. Therefore, membranes made of these materials retain their basic structure much better in the hot melt of lower melting housing materials.

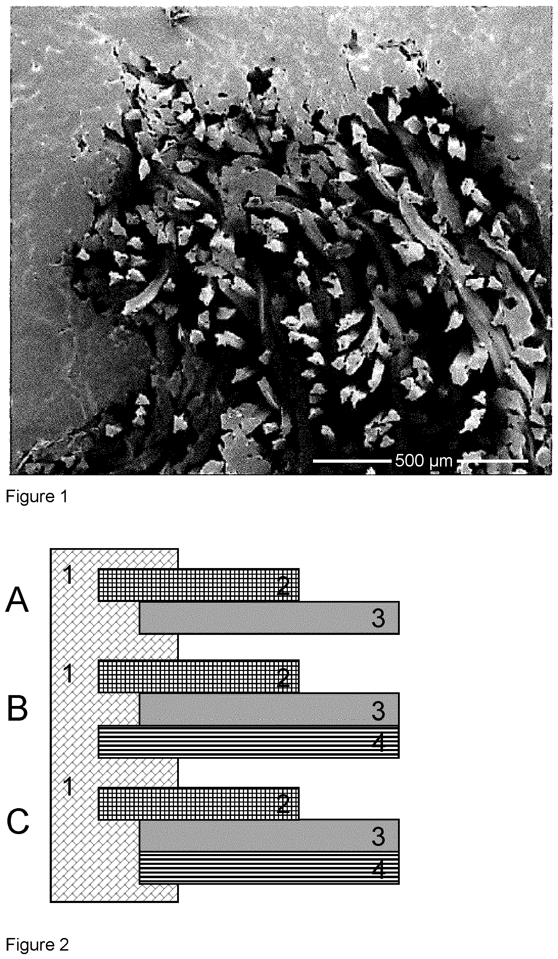

Attempts to thermally integrate polyolefin membranes into housing components made of polyolefins have repeatedly failed in previous studies, as such membranes with their high porosity contain particularly little material, which is melted due to the equal or lower melting point temperature compared to the housing components, retract and form no contact with the housing components melted for bonding (cf. Fig. 1).

Thus, so far no filter module had been available which conforms with above-mentioned trends. Thus, the technical problem underlying the present invention is to provide filter modules, particularly air filter modules, which apply component materials that are as standardised and recyclable as possible, thereby avoiding or significantly reducing environmentally and biologically harmful materials.

The solution to the above technical problem is achieved by the embodiments characterized in the claims.

In particular, the present invention relates to a filter module comprising a membrane (3), a first edge structure (2) arranged over a first surface of the membrane in an edge region thereof, and an anchoring element (1), wherein at least the first edge structure (2) is embedded in the anchoring element (1), the anchoring element (1) has a first melting temperature T_{M1}, the first edge structure (2) has a second melting temperature T_{M2}, and the membrane (3) has a third melting temperature T_{M3}, a difference T_{M1} - T_{M3} between the first and third melting temperature is from -25 K to 60 K, and a difference T_{M2} - T_{M3} between the second and third melting temperature is 15 K or more.

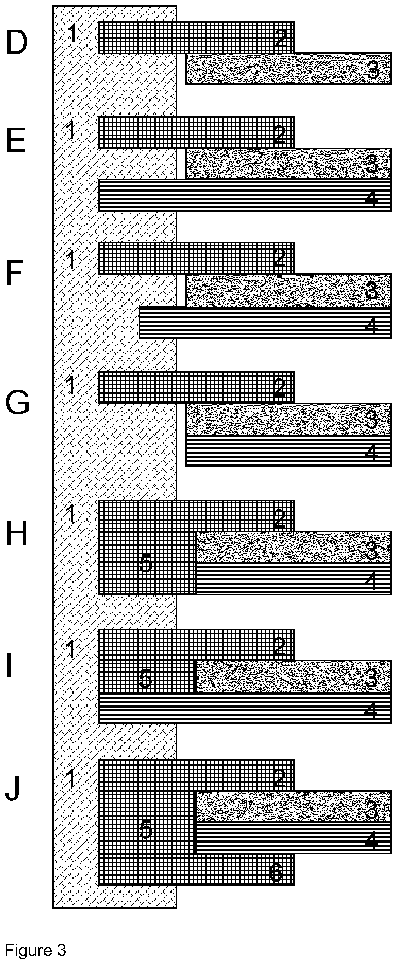

In the present invention, one or more layers of (insulating) edge structures are applied to a membrane in the edge region(s) where the membrane is commonly joined to the housing components, such as anchoring elements (cf. Figures 2 and 3). This preferably protects the membrane from (extended or any) direct melt contact during the short period of thermal joining and from temperature-induced damage, especially large-area melting and softening of the membrane.

Melting temperatures are determined by difference scanning calorimetry. For this purpose, there can be used a Netzsch DSC 214 analyzer (fully automatic; software-controlled: Netzsch Proteus software; crucible: Concavus Al, closed; atmosphere: N₂, 40 ml/min; measurement range: -70°C - 300°C, heating rate 10 K/min; sample weight: e.g. 1.7 mg).

The difference T_{M1} - T_{M3} between the first melting temperature of the anchoring element (1) and the third melting temperature of the membrane (3) is from -25 K to 60 K. Moreover, the difference T_{M1} - T_{M3} between the first and third melting temperature is preferably from -20 K to 20 K, more preferably from -10 K to 10 K.

The difference T_{M2} - T_{M3} between the second melting temperature of the first edge structure (2) and the third melting temperature of the membrane (3) is 15 K or more. Thus, the second melting temperature is at least 15 K higher than the third melting temperature. Moreover, the difference T_{M2} - T_{M3} between the second and third melting temperature is preferably 25 K or more, more preferably 50 K or more. With increasing difference T_{M2} - T_{M3}, the dimensional stability and resistance of the edge structure preferably improves, in particular when heat-bonding the edge structure to the membrane.

As the material of the anchoring element (1), there may be selected any suitable material for filter modules. Preferably, the material of the anchoring element (1) is hydrophobic, e.g. with a water contact angle of 90° or more, dimensionally and temperature stable (in particular with respect to heat sterilization at 140°C or less), and/or halogen-free. For example, the anchoring element (1) may comprise one or more polyolefins, which are preferably selected from polyethylene (T_{M1} approx. 380 K to 430 K), such as HDPE (T_{M1} approx. 418 K), and polypropylene (T_{M1} approx. 405 K to 445 K), or one or more polyamides (T_{M1} approx. 460 K to 545 K), preferably one or more polyolefins. Preferably, the material of the anchoring element (1) comprises polypropylene, more preferably is polypropylene. The first melting temperature T_{M1} of the anchoring element (1) may be from 380 K to 550 K, preferably from 390 K to 500 K, more preferably from 400 K to 450 K. Polyethylene is gamma ray stable and suitable for gamma ray sterilization. Polypropylene is mostly gamma ray stable, more heat stable than polyethylene, and particularly suitable for heat sterilization.

As the membrane material, there may be selected any suitable material for filter modules. Preferably, the membrane material is hydrophobic and/or halogen-free. For example, the membrane (3) may comprise one or more polyolefins, which are preferably selected from polyethylene, such as high-density PE (HDPE) and ultra-high molecular weight PE (UHMWPE), and polypropylene. Preferably, the membrane material is polyethylene or polypropylene. The third melting temperature T_{M3} of membrane (3) may be from 380 K to 450 K, preferably from 390 K to 445 K, more preferably from 395 K to 440 K. In case of polyethylene, the third melting temperature T_{M3} of membrane (3) may be from 380 K to 430 K, preferably from 390 K to 425 K, more preferably from 395 K to 425 K. In case of polypropylene, the third melting temperature T_{M3} of membrane (3) may be from 405 K to 445 K, preferably from 415 K to 445 K, more preferably from 420 K to 440 K.

The membrane (3) may have a thickness (between the first and second surface) of from 10 µm to 500 µm, preferably from 20 µm to 250 µm, more preferably from 25 µm to 200 µm.

The membrane (3) may also be embedded in the anchoring element (1), as exemplarily shown in Fig. 2. In this case, the membrane (3) may have an embedding depth (in the anchoring element) of at least 300 µm, preferably at least 500 µm, thereby preferably having an embedding depth equal to or less than the embedding depth of the edge structure(s). The embedding depth may be at most 2000 µm. With improved preservation of the membrane structure and embedding in the anchoring element, the more the retention by an intact membrane can be secured, especially if the edge structure is not a homogeneous dense film but a porous structure. The membrane (3) may also not be embedded in the anchoring element (1), as exemplarily shown in Fig. 3. In this case, the edge structures are preferably not porous.

The filter module comprises at least one edge structure, i.e. the first edge structure (2), but may also comprise more than one edge structure, such as two or three edge structures, as exemplarily shown in Fig. 3. In one embodiment, the membrane is encapsulated by edge structures (in the edge region on the embedding side).

The filter module may further comprise a second edge structure (6) arranged over a second surface of the membrane (3) in an edge region thereof, wherein the second surface of the membrane (3) is opposite of the first surface of the membrane (3). The second edge structure (6) has a fourth melting temperature T_{M4} and a difference T_{M4} - T_{M3} between the fourth and third melting temperature is 15 K or more. Thus, the fourth melting temperature is at least 15 K higher than the third melting temperature. Moreover, the difference T_{M4} - T_{M3} between the fourth and third melting temperature is preferably 25 K or more, more preferably 50 K or more. The further edge structure can provide additional heat protection to the opposite side of the membrane. Depending on the type of material (e.g. a layer with a higher melting temperature), the additional edge structure may also be suitable for stabilization.

The filter module may further comprise a third edge structure (5) arranged over a third surface of the membrane (3), wherein the third surface of the membrane (3) is located between the first and second surface of the membrane (3) and adjacent to the edge region of the membrane (3) on which the first edge structure (2) is arranged. The third edge structure (5) is embedded in the anchoring element (1) and the third edge structure (5) has a fifth melting temperature T_{M5}. A difference T_{M5} - T_{M3} between the fifth and third melting temperature is 15 K or more. Thus, the fifth melting temperature is at least 15 K higher than the third melting temperature. Moreover, the difference T_{M5} - T_{M3} between the fifth and third melting temperature is preferably 25 K or more, more preferably 50 K or more. The further edge structure can provide additional heat protection to the tip of the membrane at the joining/embedding region. Depending on the type of material (e.g. a layer with a higher melting temperature), the additional edge structures may also be suitable for stabilization. The filter module may comprise the second edge structure (6) and/or the third edge structure (5) in addition to the first edge structure (2).

The first and second surface of the membrane (3) are major surfaces of the membrane. The third surface of the membrane (3) is a side surface of the membrane (3), which points in the direction to or is embedded in the anchoring element (1).

The edge structures may each independently be a single-layer structure or a multi-layer structure, wherein one outer (with respect to the membrane) layer has the second, the fourth, or the fifth melting temperature, respectively, and is arranged further apart from the membrane than an inner layer and potential further other (intermediate) layer(s). For example, in case the first edge structure (2) has a multi-layer structure, the outer layer of the first edge structure (2) has the second melting temperature. In case the second edge structure (6) has a multi-layer structure, the outer layer of the second edge structure (6) has the fourth melting temperature. In case the third edge structure (5) has a multi-layer structure, the outer layer of the second edge structure (5) has the fifth melting temperature. Multilayer structures consist of two or more individual layers which are arranged together, e.g. bonded flat. Each layer retains its melting temperature. Film layers with a lower melting temperature (as long as they are compatible, i.e. can bond) bond better, while film layers with a higher melting temperature have better dimensional stability and better heat resistance during processing. The structures consisting of several layers can, thus, be advantageous for the intended bonding in the present invention. An intermediate layer between two layers with the above advantages can serve as a bond between these two layers, e.g. if the same cannot be bonded or cannot be bonded without an additional substance such as adhesive.

As the material of the first edge structure (2) or any further edge structure, there may be selected any suitable material for filter modules. For example, the edge structure(s) may (independently) comprise one or more polymers selected from the groups consisting of polyethylene, polypropylene, polyvinylidene fluoride, polyethylene terephthalate, polyethersulfone, polyamide, ethylene vinyl alcohol copolymer, ethylene vinyl acetate copolymer, polyimide, and any natural or synthetic polymer convertible to porous or homogeneous film structures. In case of the multi-layer structure, the outer layer (which is arranged farer away from the membrane (3) than the inner layer) may further also comprise metal materials, such as aluminum. For example, the inner layer(s) of the multi-layer edge structure(s) may (independently) comprise one or more polymers selected from the group consisting of polyethylene, polypropylene, polyvinylidene fluoride, ethylene vinyl alcohol copolymer, and ethylene vinyl acetate copolymer. The outer layer(s) of the multi-layer edge structure(s) may for example (independently) comprise one or more polymers selected from the group consisting of polyethylene terephthalate, polyethersulfone, polyamide, polyimide, and metal materials. The material of potential intermediate layers can be chosen depending on the materials of the adjacent layer for optimizing bonding between the layers.

The inner layer of the respective edge structure may have a sixth melting temperature T_{M6}, wherein a difference T_{M3} - T_{M6} between the third and sixth melting temperature is from -25 K to 60 K. Moreover, the difference T_{M3} - T_{M6} between the third and sixth melting temperature is preferably from -20 K to 20 K, more preferably from -10 K to 10 K.

In case of multiple edge structures, the edge structures may be made of the same material. Preferably, the edge structures are independently made from one polymer or the same multilayer structure or from polymers or multilayer structures having the same or similar melting temperatures or melting properties/behaviors. Moreover, the edge structures oriented to the direction from which the heat/temperature is applied to the membrane for thermal joining are preferably independently made from a polymer or a multilayer structure which resists a higher temperature compared to the edge structures positioned outside the direct heat exposure. In this case, the melting temperature of the edge structures with direct heat exposure may be at least 2 K, preferably at least 5 K, more preferably at least 10 K, higher than the melting temperature of the other edge structures.

The first edge structure (2) or any further edge structure may (independently) be porous, optionally having a pore size of from 0.05 µm to 10 µm, preferably from 0.10 µm to 1.0 µm, more preferably from 0.10 µm to 0.45 µm, as determined by capillary flow porometry. In case of multiple edge structures, the edge structures may have the same pore size. The porous edge structures are preferably made of PP or PESU. Microporous structures may be advantageous for the melting process as the structures have an improved interlock between membrane (3), edge structure(s) (2, 5, 6) and/or anchoring element (1).

Capillary flow porometry is a gas/liquid porosimetry in which the differential gas pressures and flow rates through a sample are measured first in the wet and then in the dry state. Prior to measurement, the sample is brought into contact with a wetting liquid in such a way that all pores are filled with this liquid. After the pores have been filled and the sample has been introduced, the measuring cell must be closed and the measurement started. After starting the measurement, the gas pressure is automatically and gradually increased and the pore diameters corresponding to the applied pressure are emptied by the gas pressure. This is continued until the relevant pore range has been covered, i.e. until even the smallest pores present in the measuring range have been freed of liquid. The pressure is then reduced again and the measurement is repeated automatically on the now dry sample. The pore size distribution is calculated from the difference between the two pressure-flow rate curves using the Young-Laplace equation (see also A. Shrestha, "Characterization of porous membranes via porometry", 2012, Mechanical Engineering Graduate Theses & Dissertations, Paper 38, University of Colorado at Boulder).

The first edge structure (2) or any further edge structure may (independently) have a thickness (orthogonal to the surface of the membrane (3) over which the respective edge structure is arranged) of from 1.0 µm to 500 µm, preferably from 10 µm to 200 µm, more preferably from 25 µm to 100 µm. In case of multiple edge structures, the edge structures may have the same thickness. Thicker edges structures can absorb more heat of the melt of the anchoring element. A lower thickness increases the filter area per filter element due to the lower thickness of the overall composite including membrane and spacers, which can also be included in the filter module, e.g. between membrane surfaces.

The first edge structure (2) and the second edge structure (6) may (independently) have a length (parallel to the surface of the membrane (3) over which the respective edge structure is arranged) of from 4.0 mm to 30 mm, preferably from 6.0 mm to 20 mm, more preferably from 6.0 mm to 15 mm. In case of multiple edge structures, the first edge structure (2) and the second edge structure (6) may have the same length, as exemplarily shown in Fig 3-J. In case of multi-layer edge structures, the different layers within one structure may have the same length.

The filter module may further comprise a support layer (4), as exemplarily shown in Figs. 2 and 3. The membrane (3) may be present on and/or partially or completely in the support layer (4). The edge structures may independently be arranged (directly) on the respective surface of the membrane (3), or the edge structures may independently be arranged on the support layer (4) over the respective surface of the membrane (3), e.g. in case the respective membrane surface is embedded in the support layer (4), as exemplarily shown for the second surface in Fig. 3-J. The first edge structure (2) may be arranged (directly) on the first surface of the membrane (3) in the edge region thereof, or the first edge structure (2) may be arranged on the support layer (4) over the first surface of the membrane (3) in the edge region thereof. The second edge structure (6) may be arranged (directly) on the second surface of the membrane (3) in the edge region thereof, or the second edge structure (6) may be arranged on the support layer (4) over the second surface of the membrane (3) in the edge region thereof. The third edge structure (5) may be arranged (directly) on the third surface of the membrane (3), or the third edge structure (6) may be arranged on the support layer (4) over the third surface of the membrane (3). The support layer (4) may extend beyond the third surface of the membrane (3), as exemplarily shown in Figs. 2-B, 3-E, and 3-I, or may extend (similar) to the third surface (e.g. Figs. 2-C, 3-G, 3-H, and 3-J). The edge of the support layer (4), which is embedded in or closer to the anchoring element (1) may extend further, similar (e.g. Figs. 2-B, 3-E, and 3-I), or less (e.g. Fig. 3-F) beyond the edge of the membrane than the edge structures (2) and/or (6).

The third edge structure (5) preferably covers the entire third surface and the entire respective surface of the optional support layer (4) and the length of the third edge structure (5) corresponds to the thickness of the membrane (3) together with the optional support layer (4).

For example, the membrane (3) may be present in the support layer (4) to an extent of at least 25 Vol-%, preferably at least 50 Vol-%, more preferably at least 75 Vol-%. Moreover, the membrane (3) may penetrate into the support layer (4) to an extent of less than 100 Vol-%. In another embodiment, the membrane (3) is only present on the support layer (4), i.e. does not penetrate into the support layer (4).

The material of the support layer (4) is not particularly limited. For example, the support layer (4) may be a nonwoven web, a woven fabric or an open microfilter membrane. Examples of nonwoven webs are polyolefin nonwovens, such as, for example, PE/Polybutylene terephthalate (PBT) (MT = approx. 533 K/503 K), PP, PP/PE core-shell nonwovens, and polyester nonwovens. The support layer is preferably a polyolefin nonwoven or a polyolefin membrane.

The presence of the support layer (4) preferably increases the dimensional and temperature stability of the membrane, introduces a material with a higher melting point temperature and simplifies the application of edge structures. In addition, the compressibility of the support layer (4) equalizes the different overall thickness of the membrane/edge structure(s) composite compared to the thinner thickness of the membrane (3).

The support layer (4) may have a thickness of from 10 µm to 1000 µm, preferably from 15 µm to 500 µm, more preferably from 20 µm to 200 µm. The support layer (4) is preferably provided over the entire length of the membrane and has at least the same length as the membrane (3).

The support layer (4) may also be embedded in the anchoring element (1), as exemplarily shown in Figs. 2, 3-E, 3-F, and 3-I. In this case, the support layer (4) may have an embedding depth (in the anchoring element) of at least 300 µm, preferably at least 500 µm. The embedding depth may be at most 2000 µm. The support layer (4) may also not be embedded in the anchoring element (1), as exemplarily shown in Fig. 3-G, 3-H, and 3-J.

The first edge structure (2) or any further edge structure may (independently) extend beyond (the edge of) the surface of the membrane (3) over which the respective edge structure is arranged. Thus, the first edge structure (2) or any further edge structure may only partially be arranged over the respective surface of the membrane (3) and may extend over the edge of the respective surface of the membrane (3) by a length of at least 300 µm, preferably at least 500 µm, and at most 2000 µm. Preferably, the edge structures do not extend beyond (the edge of) the surface of the membrane (3) over which the respective edge structure is arranged, i.e. are flush with the respective (edge of the) surface of the membrane (3), or, in case the third edge structure (5) is provided, the first edge structure (2) and/or the second edge structure (6) extend as far as the third edge structure (5), i.e. are flush with the top/outer surface of the third edge structure (5), as exemplarily shown in Figs. 3-H, 3-I, and 3-J. In case of multiple edge structures, the edge structures may extend over the edges of the respective surfaces of the membrane (3) by the same length, in particular, in the case of the first edge structure (2) and the second edge structure (6), or by different lengths. Preferably, the third edge structure (5) is arranged over the entire third surface of the membrane (3).

The first edge structure (2) or any further edge structure may (independently) have an embedding depth (in the anchoring element) of at least 300 µm, preferably at least 500 µm. The embedding depth may (independently) be at most 2000 µm. In case of multiple edge structures, the edge structures may have the same or different embedding depths.

The filter module can be used for various applications. For example, the filter module can be an air filter module, e.g. in industrial gas filtration / particle filtration, ventilation filtration in healthcare, medical technology, and pharmaceutical production processes, in particular a sterilizing grade air filter. The filter module can be applied in a (single use) filter capsule, filter cartridge or filter cassette, wherein the filter module may be integrated/melted into a polymer housing, such as a PP or PE housing. The filter module may also be introduced into a steel housing, preferably interchangeably. The membrane may be pleated or unpleated (e.g., a flat filter membrane). Preferably, the membrane is pleated.

The filter module may comprise further anchoring elements, e.g. a further anchoring element on an opposite end of the membrane than anchoring element (1). The membrane can also be embedded in such further anchoring elements. The above definitions and embodiments apply analogously to such further anchoring elements. Accordingly, further edge structures (e.g. corresponding to the first, second, and/or third edge structures) can be provided on the respective opposite edge region of the membrane. In case of a filter capsule/cartridge, the anchoring elements located substantially opposite to each other may be end caps of the capsule/cartridge on both ends of a e.g. tubular capsule/cartridge; in case of a filter cassette, the anchoring elements may be edges of cassette housing framing the membrane, wherein the housing edges are located opposite to each other.

In a further aspect, the present invention relates to a method for producing the filter module of the present invention. The production method comprises the following steps:
(a) providing a membrane (3) and a first edge structure (2),
(b) arranging the first edge structure (2) over a first surface of the membrane (3) in an edge region thereof,
(c) providing an anchoring element (1),
(d) softening a subregion of the anchoring element (1), and
(e) embedding at least the first edge structure (2) arranged over the membrane (3) in the softened subregion of the anchoring element (1),

wherein the anchoring element (1) has a first melting temperature T_{M1}, the first edge structure (2) has a second melting temperature T_{M2}, and the membrane (3) has a third melting temperature T_{M3},
a difference T_{M1} - T_{M3} between the first and third melting temperature is from -25 K to 60 K, and
a difference T_{M2} - T_{M3} between the second and third melting temperature is 15 K or more. The above definitions and embodiments apply analogously for this aspect of the present invention. The following definitions and embodiments apply likewise analogously for the filter module of the present invention.

Methods for providing the membrane, the edge structures, and the anchoring element are known in the art. For example, the membrane may be provided by temperature- or solvent-induced phase inversion, physical dissolution or mixing in organic solvents, oil / mineral oil or extrusion / expansion processes. In case a support layer (4) is also included in the filter module, the step of providing the membrane may include providing a support layer (4), e.g. spun-bond, melt-blown, electro-spun, either wet laid, air laid or carded materials, and providing the final membrane (3) or a precursor of the membrane on and/or partially in the support layer (4). The edge structures may be provided by film extrusion, or film blowing optionally supported by stretching post treatment. The anchoring element (1) may be provided by injection molding, either in a separate step or directly at filter assembly.

Methods for arranging the first edge structure (2) over a first surface of the membrane (3) in an edge region thereof are known in the art. In case the filter module comprises further edge structures, the production method comprises further steps of arranging the respective edge structure over the respective surface of the membrane (3). Examples of respective arranging methods are thermo-mechanical processes, such as heated sliders or rolls under compressing force, or surface adhesion effects, either supported by lower melting polymers or glueing resins or hot melt resins. The membrane structure may be compacted when the edge structure is applied. This may result a thinning of the membrane.

Suitable methods for softening a subregion of the anchoring element (1) and embedding at least the first edge structure (2) arranged over the membrane (3) in the softened subregion of the anchoring element (1) are known in the art. Examples of respective softening methods are heat radiators in any combination of convective and radiation heat transfer, laser or heat wire heating or direct application of separately generated polymer melt e.g. by extrusion. Examples of respective embedding methods are linear mechanical transfer of pleated filter package face into the anchoring element, or transfer of the anchoring element into the pleated package face, or application of the molten (extruded) polymer into a mold already containing the pleated package end, or first filling the mold with molten (extruded) polymer followed by transfer of the pleated package face into the filled mold. In case the filter module comprises further edge structures and/or anchoring elements, the production method may comprise further steps of embedding the respective edge structure(s) in a softened subregion of the anchoring element(s). The membrane (3) and/or the optional support layer (4) may also be embedded in the anchoring element (1) or in potential further anchoring elements and the production method may comprise further steps of embedding the membrane (3) and/or the optional support layer (4) in a softened subregion of the anchoring element(s). The respective subregions may be softened together. Moreover, the respective embedding steps may be carried out together.

The production method may comprise further steps, such as cutting to even/flush edges of edge structure and membrane, carrying out secondary thermo-mechanic post treatment to adjust the thickness of edge-structure or membrane composite thickness, or changing the structure e.g. closing pores of a porous membrane or a porous substructure.

A further aspect of the present invention relates to the use of the filter module of the present invention for filtering a fluid medium. The above definitions and embodiments apply analogously for this aspect of the present invention. The following definitions and embodiments apply likewise analogously for the filter module and the production method of the present invention.

Examples of the fluid medium are gaseous fluids such as air, e.g. supply air and exhaust air as well as ventilation air, e.g. of sterile tanks of any kind, or O₂ and N₂ for example as supply to/from bioreactors. Preferably, the fluid medium is air.
- Fig. 1:: Microscopic top view of disintegrated PE membrane and support, taken from sealing sections after the sealing test (magnification: 240x). A HMWPE membrane that has retracted or disintegrated due to the effect of heat/melting can be seen.
- Figs. 2 and 3:: Exemplary schematic cross-sectional illustrations of possible embodiments of embedding the filter membrane in an anchoring element and the respective arrangement of the anchoring element (1), membrane (3), edges structures (2, 5, 6), and optional support layer (4). The shown arrangements may be either the edge of one leg of a pleated fold or the edge of a flat filter membrane.
- Fig. 4:: Optical microscopy image (polarisation light) of membranes of a pleated filter without edge structure and attempted embedding in an anchoring element of a filter module (e.g., an end cap): a) support non-woven; b) membrane; c) anchor element melt zone.
- Fig. 5:: Optical microscopy image (incident light) of membranes of a pleated filter without edge structure and attempted embedding in an anchoring element of a filter module (e.g., an end cap): a) support non-woven; b) membrane.
- Fig. 6:: Optical microscopy image (polarisation light) of membranes of a pleated filter with edge structure and embedded in an anchoring element of a filter module (e.g., an end cap): a) support non-woven; b) membrane; c) anchor element melt zone; d) edge structure.
- Fig. 7:: Optical microscopy image (incident light) of membranes of a pleated filter with edge structure and embedded in an anchoring element of a filter module (e.g., an end cap): a) support non-woven; b) membrane.

The present invention will be further illustrated in the following examples without being limited thereto.

### Example: Membranes with and without edge structure and embedded in an anchoring element

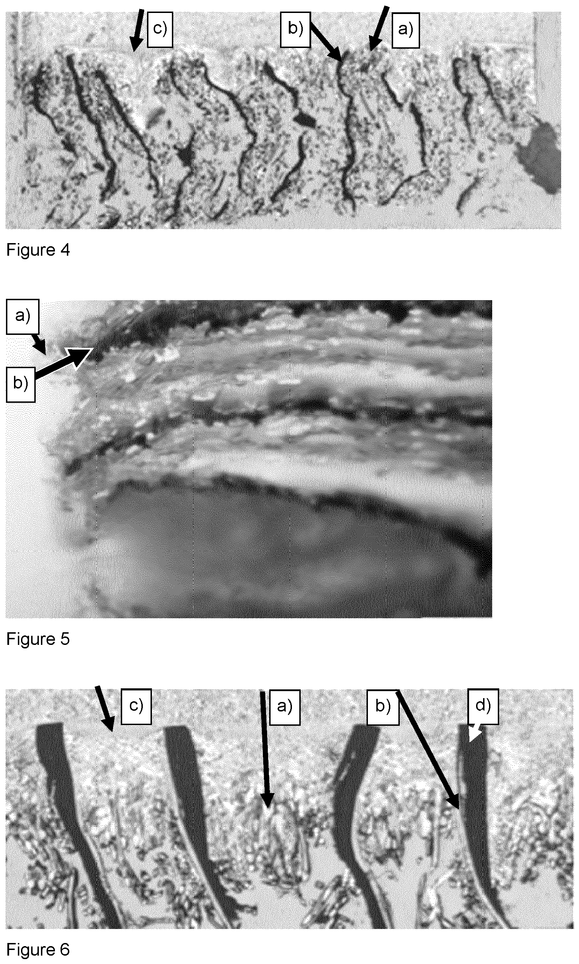

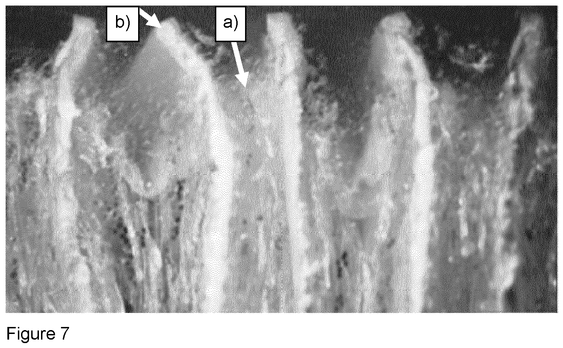

Attachment of a pleated PP membrane with support layer is carried out to the filter end cap as anchoring element of a pleated filter cartridge with and without a PESU edge structure laminated on one side in the edge region (= edge lamination). Figs. 4 to 7 show microscopic cross-sectional images of the filter end cap and the membrane pleating (Figs. 4 and 6: polarisation light; Figs. 5 and 7: incident light). Figs. 4 and 5 show that the PP membrane melted more than the support layer when it was placed in the cap. As a result, no bonding could be achieved in the melt. In contrast, bonding was achieved when using the edge structure. The filter cartridge was tight, air-permeable and waterproof/water-repellent (Figs. 6 and 7).

## Claims

1. A filter module comprising:
a membrane (3);
a first edge structure (2) arranged over a first surface of the membrane (3) in an edge region thereof; and
an anchoring element (1),
wherein at least the first edge structure (2) is embedded in the anchoring element (1),
the anchoring element (1) has a first melting temperature T_{M1}, the first edge structure (2) has a second melting temperature T_{M2}, and the membrane (3) has a third melting temperature TM3,
a difference T_{M1} - T_{M3} between the first and third melting temperature is from -25 K to 60 K, and
a difference T_{M2} - T_{M3} between the second and third melting temperature is 15 K or more.

2. The filter module according to claim 1, wherein the difference T_{M2} - T_{M3} between the second and third melting temperature is 25 K or more, preferably 50 K or more.

3. The filter module according to claim 1 or 2, wherein the difference T_{M1} - T_{M3} between the first and third melting temperature is from -20 K to 20 K.

4. The filter module according to any one of claims 1 to 3, wherein the membrane (3) comprises one or more polyolefins, preferably selected from polyethylene and polypropylene.

5. The filter module according to any one of claims 1 to 4, wherein the filter module further comprises a support layer (4), wherein the membrane (3) is present on and/or partially or completely in the support layer (4), and wherein the first edge structure (2) is arranged on the first surface of the membrane (3) in the edge region thereof, or the first edge structure (2) is arranged on the support layer (4) over the first surface of the membrane (3) in the edge region thereof.

6. The filter module according to any one of claims 1 to 5, wherein the first edge structure (2) is porous, optionally having a pore size of from 0.05 µm to 10 µm, preferably from 0.10 µm to 1.0 µm, more preferably from 0.10 µm to 0.45 µm, as determined by capillary flow porometry.

7. The filter module according to any one of claims 1 to 6, wherein the first edge structure (2) comprises one or more polymers selected from the groups consisting of polyethylene, polypropylene, polyvinylidene fluoride, polyethylene terephthalate, polyethersulfone, polyamide, ethylene vinyl alcohol copolymer, ethylene vinyl acetate copolymer, polyimide, and any natural or synthetic polymer convertible to porous or homogeneous film structures.

8. The filter module according to any one of claims 1 to 7, further comprising a second edge structure (6) arranged over a second surface of the membrane (3) in an edge region thereof, wherein the second surface of the membrane (3) is opposite of the first surface of the membrane (3), and
wherein the second edge structure (6) has a fourth melting temperature T_{M4}, and
a difference T_{M4} - T_{M3} between the fourth and third melting temperature is 15 K or more.

9. The filter module according to any one of claims 1 to 8, further comprising a third edge structure (5) arranged over a third surface of the membrane (3), wherein the third surface of the membrane (3) is located between the first and second surface of the membrane (3) and adjacent to the edge region of the membrane (3) on which the first edge structure (2) is arranged,
wherein third edge structure (5) is embedded in the anchoring element (1),
the third edge structure (5) has a fifth melting temperature T_{M5}, and
a difference T_{M5} - T_{M3} between the fifth and third melting temperature is 15 K or more.

10. The filter module according to any one of claims 1 to 9, wherein at least one edge structure has a multi-layer structure comprising an inner layer and an outer layer,
wherein the outer layer is arranged on the inner layer opposite of the membrane (3), and wherein the outer layer has the second, fourth, or fifth melting temperature, respectively.

11. The filter module according to claim 10, wherein the inner layer has a sixth melting temperature T_{M6}, wherein a difference T_{M3} - T_{M6} between the third and sixth melting temperature is from -25 K to 60 K.

12. The filter module according to any one of claims 1 to 11, wherein each of the edge structures (2, 5, 6) independently has a thickness of from 1.0 µm to 500 µm, preferably from 10 µm to 200 µm, and an embedding depth of at least 300 µm, preferably at least 500 µm.

13. The filter module according to any one of claims 1 to 12, wherein the anchoring element (1) may comprise one or more polyolefins.

14. A method for producing the filter module according to any one of claims 1 to 13, comprising the following steps:
(a) providing a membrane (3) and a first edge structure (2),
(b) arranging the first edge structure (2) over a first surface of the membrane (3) in an edge region thereof,
(c) providing an anchoring element (1),
(d) softening a subregion of the anchoring element (1), and
(e) embedding at least the first edge structure (2) arranged over the membrane (3) in the softened subregion of the anchoring element (1),
wherein the anchoring element (1) has a first melting temperature T_{M1}, the first edge structure (2) has a second melting temperature T_{M2}, and the membrane (3) has a third melting temperature T_{M3},
a difference T_{M1} - T_{M3} between the first and third melting temperature is from -25 K to 60 K, and
a difference T_{M2} - T_{M3} between the second and third melting temperature is 15 K or more.

15. Use of the filter module according to any one of claims 1 to 13 for filtering a fluid medium, preferably air.
